# FASCICULE DE BREVET EUROPEEN

(11) **EP 3 573 848 B1**
(45) Date de publication et mention de la délivrance du brevet: **07.04.2021**
(21) Numéro de dépôt: 18708449.6
(22) Date de dépôt: 25.01.2018
(51) Int. Cl.: B60C 11/03, B60C 11/00

(54) **PNEUMATIQUE À BANDE DE ROULEMENT OPTIMISÉE**
REIFEN MIT OPTIMIERTER LAUFFLÄCHE
TYRE WITH OPTIMISED TREAD

(30) Priorité: 27.01.2017 FR 1750661
(43) Date de publication de la demande: 04.12.2019
(73) Titulaire: Compagnie Générale des Etablissements Michelin, 63000 Clermont-Ferrand (FR)
(72) Inventeur: GRANDEMANGE, Mathieu, 63040 Clermont-Ferrand Cedex 9 (FR); PERRIER, Estelle, 63040 Clermont-Ferrand Cedex 9 (FR)
(74) Mandataire: Boyer, Chris Michel
(86) Numéro de dépôt international: PCT/FR2018/050171
(87) Numéro de publication internationale: WO 2018/138440

(56) Documents cités:
- EP-A1- 2 292 451
- EP-A1- 2 529 952
- EP-A1- 2 589 502
- EP-A1- 2 962 874
- EP-A1- 2 995 473
- WO-A1-2013/021271
- WO-A1-2014/193384
- DE-A1- 3 901 624
- FR-A1- 3 035 821
- US-A1- 2012 180 918
- US-A1- 2013 299 054

## Description

### DOMAINE DE L'INVENTION

La présente invention concerne un pneumatique de véhicule de tourisme dont l'indice de vitesse est au moins V, c'est-à-dire d'un pneumatique qui est destiné à être monté sur un véhicule, par exemple de compétition, dont la vitesse maximale est au moins égale à 240 km/h. L'invention a plus particulièrement pour objet la bande de roulement d'un tel pneumatique. Par « indice de vitesse qui est au moins V » nous entendons tous les pneumatiques dont l'indice de vitesse autorise une vitesse maximale au moins égale à 240 km/h.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Un plan circonférentiel est un plan perpendiculaire à l'axe de rotation. Le plan médian circonférentiel, dit équateur est le plan perpendiculaire à l'axe de rotation et passant par le milieu de la bande de roulement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est appelée surface de roulement et dont la plus radialement intérieure est appelée surface de limite d'usage. De plus, la bande de roulement d'un pneumatique est délimitée, selon la direction axiale, par deux surfaces latérales. La bande de roulement est en outre constituée par un ou plusieurs mélanges caoutchouteux, appelés également gommes. L'expression « mélange caoutchouteux » désigne une composition de caoutchouc comportant au moins un élastomère et une charge.

Les véhicules de tourisme ou de compétition dont la vitesse maximale est au moins égale à 240 km/h peuvent être utilisés sur des circuits de course de vitesse. Afin d'obtenir des performances en adhérence maximales sur sol sec, ces véhicules sont équipés de pneumatiques lisses à savoir sans découpures dans la bande de roulement. En cas d'utilisation sur route humide, les pneumatiques sont dotés de découpures débouchant notamment sur les surfaces latérales de la bande de roulement afin d'évacuer l'eau contenue dans l'aire de contact entre le pneumatique et le sol de roulage.

Une découpure désigne soit un puits, soit une rainure, soit une incision, soit un sillon circonférentiel et forme un espace débouchant sur la surface de roulement. Un puits a, sur la surface de roulement, une surface débouchante inscrite dans un cercle de diamètre caractéristique W. Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure. Dans une rainure de largeur variable, il est possible à l'homme du métier de calculer une largeur moyenne de la rainure.

### ETAT DE LA TECHNIQUE

Dans le contexte de la compétition, la performance en adhérence sur sol sec est fondamentale. Cet objectif est traditionnellement atteint en augmentant la surface de contact du pneumatique avec le sol afin de maximiser les forces de contact entre la bande de roulement et le sol de roulage dans l'aire de contact ; cela peut être atteint en diminuant la pression interne du le pneumatique, en optimisant l'architecture du pneumatique mais il est impossible de diminuer un taux d'entaillement volumique qui, par définition, est nul, c'est-à-dire dans une bande de roulement sans découpure. Des pneumatiques pour hautes vitesses représentant l'art antérieur sont décrits dans les documents DE 3901624 A1, WO 2014/193384 A1 et EP 2995473 A1.

Par ailleurs lorsque les autorités de tutelle du sport automobile-« formule 1 » ont décidé de limiter l'adhérence des pneumatiques, ils ont obligé les manufacturiers de pneumatiques à disposer plusieurs sillons circonférentiels, 4 en l'occurrence, répartis sur toute la largeur de la bande de roulement du pneumatique afin de limiter la quantité de gomme en contact avec le sol et donc l'adhérence sur sol sec.

Cependant le besoin croissant en adhérence existe et dépend des différentes réglementations des courses. Ces mêmes règlements limitent les dimensions des pneumatiques. Les solutions consistent le plus souvent à agir sur les mélanges caoutchouteux, ou gommes, constituant la bande de roulement. Cependant les gommes les plus adhérentes posent souvent des problèmes de vitesse d'usure car elles sont peu rigides et s'usent rapidement.

De plus, dans ce contexte spécifique, le besoin d'adhérence est plus important à haute vitesse, pour freiner à vitesse maximale en entrée de virage et non pour s'arrêter.

### EXPOSE DE L'INVENTION

L'objectif principal de la présente invention est donc d'augmenter l'adhérence d'un pneumatique dont l'indice de vitesse est au moins V c'est-à-dire destiné à être monté sur un véhicule dont la vitesse maximale autorisée est au moins égale à 240 km/h, dont la largeur axiale est au moins égale à 200 mm et ayant un périmètre extérieur P, comprenant :
- une bande de roulement destinée à entrer en contact avec un sol par l'intermédiaire d'une surface de roulement, ayant une largeur axiale LBDR et un taux d'entaillement volumique au moins égal à 2% et au plus égal à 20%,
- la bande de roulement comportant une partie centrale Pc, centrée sur le plan équatorial C et délimitée par deux plans circonférentiels (C1, C2), et deux parties latérales PI positionnées axialement de part et d'autre de la partie centrale Pc, chaque partie latérale Pl ayant un taux d'entaillement volumique au plus égal à 2%,
- la partie centrale Pc de la bande de roulement comprenant au moins une rainure, formant un espace débouchant sur la surface de roulement et étant délimitée par au moins deux faces latérales principales reliées par une face de fond,
- la au moins une rainure de la partie centrale Pc de la bande de roulement ayant une largeur moyenne W au moins égale à 6 mm et au plus égale à 30 mm, préférentiellement au plus égale à 20 mm et une profondeur H au moins égale à 3 mm et au plus égale à 6 mm,
- la partie centrale Pc de la bande de roulement a une largeur axiale au plus égale au tiers de la largeur axiale LBDR de la bande de roulement,
- toute portion de la partie centrale Pc de la bande de roulement, circonférentiellement délimitée par deux plans méridiens séparés par une distance circonférentielle dc égale à un dixième du périmètre extérieur P du pneumatique, comprend au moins une et au plus trois rainures ouvertes sur les plans méridiens délimitant la portion considérée
Cet objectif est atteint par les caractéristiques de la revendication 1.

L'invention est basée sur l'utilisation des phénomènes aérodynamiques du pneumatique. Ces phénomènes ne deviennent influents que pour des usages à haute vitesse. C'est pourquoi l'invention concerne les pneumatiques dont l'indice de vitesse est au moins V ou qui sont destinés à être monté sur un véhicule dont la vitesse maximale est au moins 240 km/h.

Le roulage à haute vitesse du pneumatique crée un phénomène de surpression de l'air extérieur au pneumatique à l'entrée de l'aire de contact du pneumatique vis-à-vis du sens de roulage et de dépression de cet air à la sortie de l'aire de contact. Cette différence de pression est d'autant plus grande que le pneumatique est large. Pour un pneumatique de faible largeur cette différence de pression n'est pas utilisable. Ainsi l'invention concerne des pneumatiques dont la largeur axiale, mesurée entre les points les plus axialement extérieurs du pneumatique est au moins égale à 200 mm.

En positionnant une rainure continue dans la bande de roulement entre l'entrée de l'aire de contact et la sortie, il se crée une circulation d'air qui génère un phénomène d'aspiration du pneumatique qui crée l'équivalent d'une charge aérodynamique comme le ferait un aileron placé sur le véhicule. Un des avantages vis-à-vis de cette solution est qu'ajouter un aileron augmente la trainée du véhicule donc de sa consommation alors que la présence d'une rainure dans la bande de roulement permettant la circulation de l'air de l'entrée à la sortie de l'aire de contact n'augmente pas la trainée du véhicule.

La surpression et la dépression sont maximales au niveau du plan équatorial du pneumatique et diminuent en s'éloignant de celui-ci, de sorte que la ou les rainures présentes dans la bande de roulement doivent être avantageusement positionnées dans la partie centrale de la bande de roulement. Cette partie centrale est centrée sur le plan équatorial du pneumatique et a une largeur axiale égale à un tiers de la largeur de la bande de roulement (LBDR/3).

La ou les rainures ont avantageusement une largeur moyenne au moins égale à 6 mm pour garantir qu'elle ne se ferment pas lors de leurs passages dans l'aire de contact. La largeur moyenne de la au moins une rainure est au plus égale à 30 mm, préférentiellement 20 mm, pour ne pas diminuer excessivement la surface de l'aire de contact afin de garantir des performances en adhérence et en comportement correctes à toutes les vitesses du véhicule sur lequel sont montés les pneumatiques. De plus, pour ce même objectif, le taux d'entaillement volumique de la bande de roulement doit être au plus égal à 20%, préférentiellement au plus égal à 12%.

Au-delà de trois rainures dans la partie centrale de la bande de roulement, la surpression et la dépression diminuent et la vitesse de l'écoulement dans les rainures également. De ce fait le phénomène d'aspiration diminue et ne compense plus la perte de gomme au sol consécutive à la présence des rainures.

Pour réaliser l'invention, il convient de disposer des rainures sur toute la circonférence de la bande de roulement du pneumatique, dans la partie centrale de la bande de roulement de manière à ce que, quelle que soit la portion de la surface de roulement en contact avec le sol, au moins une rainure et au plus trois rainures permettent l'écoulement de l'air depuis l'entrée de l'aire de contact du pneumatique vers la sortie de l'aire de contact. Pour ce type de pneumatique, l'aire de contact dans les phases à haute vitesse où le phénomène se produit, représente au plus un dixième de la circonférence du pneumatique. Pour réaliser l'invention il suffit donc de disposer les rainures de telle façon que toute portion de la bande de roulement comprise entre deux plans méridiens dont la distance circonférentielle (dc) est égale à un dixième du périmètre extérieur du pneumatique comprend au moins une et au plus trois rainures ouvertes sur les plans méridiens délimitant la portion considérée.

Une rainure est dite ouverte sur un plan si l'intersection entre le plan et la rainure n'est pas nulle. Si l'intersection entre la rainure et les deux plans n'est pas nulle, l'air peut circuler dans la rainure d'un plan à l'autre. De plus la distance circonférentielle entre les dits plans méridiens mentionnés dans l'invention est telle qu'elle est au moins égale à la longueur circonférentielle de l'aire de contact. Donc quelle que soit la position circonférentielle de l'aire de contact sur le pneumatique, il existe une rainure qui permet la circulation d'air entre la surpression et la dépression de part et d'autre de l'aire de contact, permettant à haute vitesse de créer l'effet d'aspiration recherché par l'invention.

Etant donné les performances en adhérence visées pour le pneumatique, il ne conviendrait pas que le matériau en contact avec le sol et donc constituant au moins une partie de la bande de roulement n'ait pas une adhérence importante. L'adhérence d'un matériau caoutchouteux peut en particulier être caractérisée par la perte à 60°C, mesuré à 60°C et 10 Hz. Une solution préférée est telle que la bande de roulement comprend un matériau caoutchouteux dont le facteur de perte, mesuré à 60°C et 10 Hz, est au moins égal à 25%, préférentiellement au moins égal à 35%.

Le facteur de perte à 60°C, qui est une perte d'énergie à 60 °C par rebond à énergie imposée mesurée au sixième choc et dont la valeur, exprimée en %, est la différence entre l'énergie fournie et l'énergie restituée, divisée par l'énergie fournie.

Les pneumatiques considérés sont également conçus pour avoir des rigidités de dérive et latérale élevées pour assurer une très bonne performance en comportement : l'épaisseur radiale de la bande de roulement est donc limitée à 7 mm et pour une performance améliorée limitée à 5.5 mm. L'invention nécessitant l'existence d'une rainure d'une profondeur au moins égale à 3 mm, l'épaisseur radiale de la bande de roulement est donc au moins égale à 3 mm. Une solution préférée est que la bande de roulement ait une épaisseur radiale maximale E au moins égale à 3 mm et au plus égale à 7mm, préférentiellement au plus égale à 5.5 mm.

Etant donné la répartition des surpressions et des dépressions en entrée et en sortie d'aire de contact par rapport au plan équatorial, une solution préférée est que la partie centrale Pc dans laquelle sont disposées les rainures soit centrée sur le plan équatorial et ait une largeur axiale égale à un quart de la largeur bande de roulement (LBDR/4), préférentiellement à un cinquième (LBDR/5).

Suivant l'invention, les taux d'entaillement respectifs des parties latérales PI de la bande de roulement sont nuls. Cela optimise l'aire de contact du pneumatique et améliore l'adhérence. La mesure du taux d'entaillement volumique ne prend pas en compte d'éventuels dispositifs permettant l'évaluation de la limite usage du pneumatique en raison de l'usure dans la bande de roulement, comme des puits d'usure.

Dans des pneumatiques conçus pour être soumis à des vitesses élevées, tels que les pneumatiques selon l'invention, il est courant que les pneumatiques aient un sens de montage prédéterminé sur le véhicule. Dans ce cas chaque pneumatique comporte un bord axial extérieur et un bord axial intérieur. Le bord axial intérieur est le bord destiné à être monté du côté de la caisse du véhicule lorsque le pneumatique est monté sur le véhicule selon ledit sens de montage prédéterminé. Une solution avantageuse est qu'au moins une rainure de la bande de roulement ait une face latérale principale intérieure, axialement la plus proche du bord axial intérieur, formant, avec un plan circonférentiel (XZ), un angle moyen de dépouille (AI) au moins égal à 10°, préférentiellement au moins égal à 30°. Cette solution permet de se prémunir contre des formes d'usure localisée de la bande de roulement au niveau de la face latérale de la au moins une rainure la plus axialement proche du bord axial intérieur.

Bien que la face latérale extérieure d'une rainure, c'est à dire la plus axialement éloignée du bord axial intérieur, dite face latérale extérieure, soit moins sensible à une usure locale, il peut être intéressant également que la dite face latérale extérieure forme un angle dit de dépouille avec l'axe radial. Etant donné les dissymétries liés à l'usage des véhicules, une solution préférée est que la au moins une rainure de la bande de roulement ait une face latérale principale extérieure, axialement la plus éloignée du bord axial intérieur, formant, avec un plan circonférentiel (XZ), un angle moyen de dépouille (AE) au plus égal à l'angle moyen de dépouille (Al) de la face latérale principale intérieure.

Les pneumatiques selon l'invention peuvent être utilisés sur des circuits fermés dans le cadre de compétitions automobiles. Dans ces compétitions, les pneumatiques utilisés peuvent comporter des rainures créées par moulage, lors de la cuisson du pneumatique, ou les pneumatiques peuvent être taillés par tout procédé mécanique de taillage ou d'usinage afin de comporter ce type de rainures. Le taillage de pneumatique est en effet pratiqué en sport automobile pour s'adapter aux conditions spécifiques d'usage de la journée de compétition.

Une solution avantageuse est que la partie centrale Pc ne contienne que des rainures sensiblement circonférentielles faisant toute la circonférence de la bande de roulement, autrement dits des sillons circonférentiels. Cette solution est en effet la plus simple mise en oeuvre de l'invention. L'invention fonctionne avec une, deux ou trois rainures sensiblement circonférentielles. Avantageusement la partie centrale Pc de la bande roulement contient une unique rainure sensiblement circonférentielle s'étendant sur toute la circonférence de la bande de roulement.

Il est avantageux que les positions axiales des faces latérales de la rainure sensiblement circonférentielle ont des variations (v) dans la circonférence au moins égales à 1 mm par rapport à leurs positions axiales moyennes. Ces variations peuvent ainsi soit créer des rétrécissements locaux de la rainure en diminuant localement sa section de manière à créer localement un effet venturi qui va augmenter la vitesse de circulation de l'air et donc l'effet d'aspiration associé. Ces variations de positionnement axial peuvent être également coordonnées entre les deux faces latérales des rainures. Ceci permet d'augmenter la rigidité en cisaillement de la bande de roulement autour des rainures et donc de gagner en rigidité sur le pneumatique, effet souvent recherché dans ce type de pneumatique.

Il est donc particulièrement avantageux que la largeur moyenne W de l'unique rainure sensiblement circonférentielle ait des variations (v) au moins égales à 1 mm sur toute la circonférence du pneumatique.

Il est avantageux que la limite de l'usage du pneumatique en raison de l'usure soit indiquée uniquement à l'aide de dispositifs disposés dans la bande de roulement en dehors des rainures de la partie centrale Pc de la bande de roulement. En effet la présence de ces dispositifs, dits témoin d'usure, dans les rainures peut perturber l'écoulement et, selon leurs dispositions et leurs géométries, diminuer l'efficacité de l'invention.

Les véhicules sur lesquels sont montés les pneumatiques visés sont souvent dépourvus de carénages autour des ensembles montés pour ne pas alourdir le véhicule. Le terme ensemble monté désigne dans le langage technique un pneumatique monté sur une jante.

Ces véhicules pour lesquels les performances en accélération sont primordiales sont souvent également munis d'ailerons aérodynamiques devant au moins un des ensembles montés du véhicule.

### BREVE DESCRIPTION DES DESSINS

Les caractéristiques et autres avantages de l'invention seront mieux compris à l'aide des figures 1 à 8, les dites figures n'étant pas représentées à l'échelle mais de façon simplifiée, afin de faciliter la compréhension de l'invention :
- La figure 1 est une vue générale du pneumatique 1 selon l'invention, en particulier sa bande de roulement 2 et sa surface de roulement 21. Le pneumatique en question est doté d'un sens de montage SM indiqué pour l'exemple sur le flanc, mais pouvant être indiqué à la convenance du fabricant.
- La figure 2 représente une coupe méridienne du sommet d'un pneumatique selon l'invention et illustre la partie centrale PC, les parties latérales Pl, la largeur LBDR de la bande de roulement, les rainures 22 ainsi que leurs deux faces latérales principales 221 et 222 reliées par une face de fond 223.
- Les figures 3A et 3B présentent deux types de profils méridiens radialement extérieurs de la bande de roulement 2 d'un pneumatique de tourisme pour lesquels est précisée la mesure de la largeur de la bande de roulement.
- La figure 4 définit les 'bord axial intérieur' 46 et 'bord axial extérieur' 45 d'une bande de roulement.
- La figure 5 illustre une disposition de rainures 22 selon l'invention.
- La figure 6 illustre un premier mode de réalisation d'une bande de roulement selon l'invention avec une unique rainure circonférentielle 22, ou sillon circonférentiel, dont les faces latérales 221 et 222 ont des variations de positions axiales (v) selon la direction circonférentielle au moins égales à 1 mm par rapport à leur position axiale moyenne en vue de créer des effets venturis locaux.
- La figure 7 illustre un deuxième mode de réalisation d'une bande de roulement selon l'invention avec une unique rainure circonférentielle 22, ou sillon circonférentiel, dont les faces latérales 221 et 222 ont des variations de positions axiales (v) selon la direction circonférentielle au moins égales à 1 mm par rapport à leur position axiale moyenne pour rigidifier le pneumatique autour des faces latérales de la rainure.
- La figure 8 illustre l'angle moyen de dépouille Al de la face latérale intérieure d'une rainure 22, la plus axialement proche du bord axial intérieur 46 destiné à être positionnée côté intérieur véhicule, et l'angle moyen de dépouille AE de la face latérale extérieure d'une rainure 22, la plus axialement éloignée du bord axial intérieur 46.

### DESCRIPTION DETAILLEE DES DESSINS

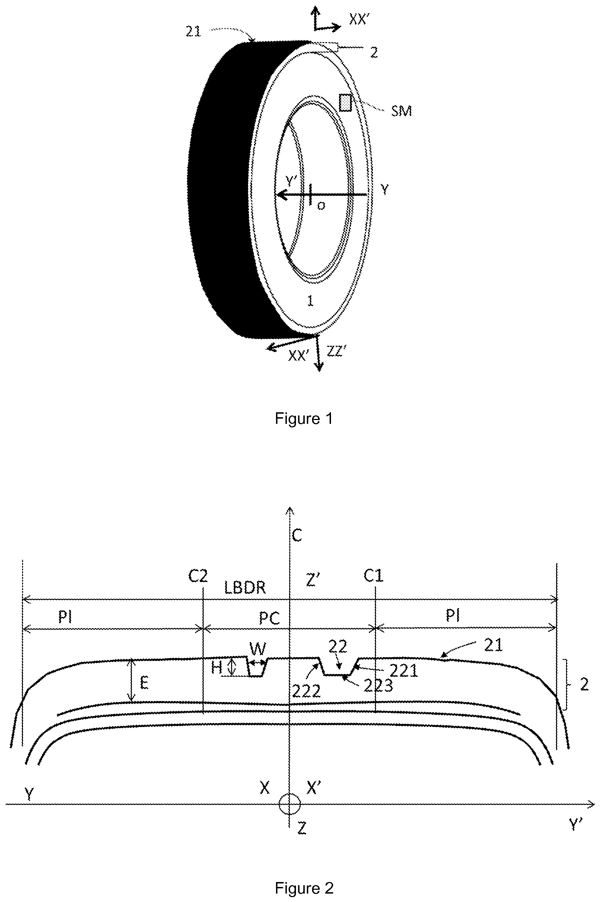

La figure 1 représente une vue en perspective d'un pneumatique 1 ayant une bande de roulement 2 et éventuellement un sens de montage SM préconisé par le fabricant. La bande de roulement présente une surface de roulement 21. La figure 1 représente également le repère (O, X, Y, Z) utilisé.

La figure 2 représente schématiquement une coupe méridienne, dans un plan méridien YZ, du sommet d'un pneumatique selon l'invention. Elle illustre en particulier la largeur LBDR et l'épaisseur E de la bande roulement 2, ainsi que ses parties centrale Pc et latérales Pl. Sont représentées également une rainure 22 et ses faces latérales 221 et 222 ainsi que la face de fond 223. La profondeur H d'une rainure 22 est la distance radiale entre le point le plus radialement intérieur de la surface de fond 223 et le point de la surface de roulement 21 le plus proche dudit point. La figure 2 représente aussi que la largeur moyenne W de la rainure 22.

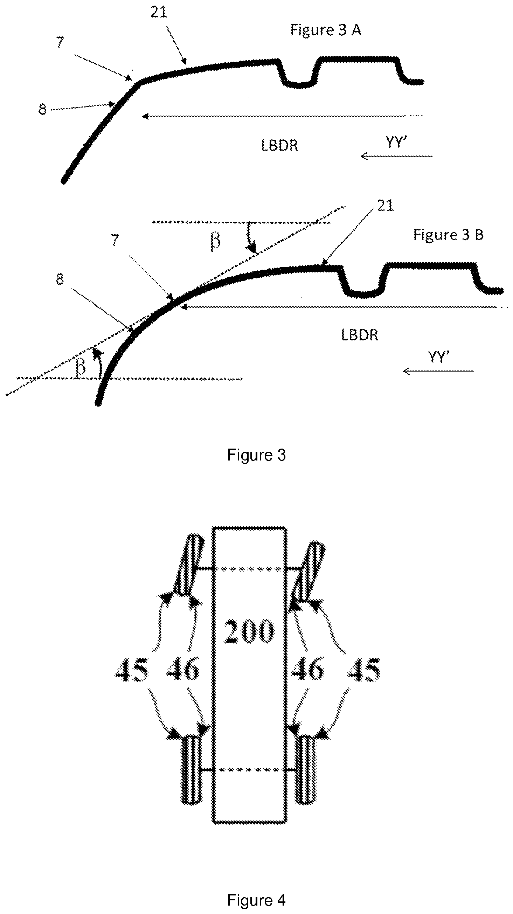

Sur les figures 3A et 3B, on détermine, dans un plan méridien, les extrémités axiales 7 de la surface de roulement qui permettent de mesurer la largeur bande de roulement dans ce plan méridien. Sur la figure 3A où la surface de roulement 21 est sécante avec la surface axiale extérieure du pneumatique 8, la frontière axiale 7 est trivialement déterminé par l'homme de l'art. Dans la figure 3B où la surface de roulement 21 est continue avec la surface axiale extérieure du pneumatique 8, on trace, sur une coupe méridienne du pneumatique, la tangente à la surface de roulement en tout point de ladite surface de roulement dans la zone de transition vers le flanc. La première frontière axiale 7 passe par le point pour lequel l'angle β (beta) entre ladite tangente et une direction axiale YY' est égal à 30°. Lorsqu'il existe, dans un plan méridien, plusieurs points pour lesquels l'angle β entre ladite tangente et une direction axiale YY' est égal à 30°, on prend en compte le point radialement le plus à l'extérieur. On procèdera de la même manière pour déterminer la seconde extrémité axiale de la surface de roulement. La largeur de la bande de roulement, dans le plan méridien, est la distance axiale entre les deux points du plan méridien des deux extrémités axiales de la surface de roulement. La largeur de la bande de roulement du pneumatique est la valeur maximale des largeurs de la bande de roulement sur tous les méridiens.

La figure 4 représente schématiquement des pneumatiques montés sur des jantes de montage de roues d'un véhicule 200 et ayant un sens de montage prédéterminé sur le véhicule. Chaque pneumatique comporte un bord axial extérieur 45 et un bord axial intérieur 46, le bord axial intérieur 46 étant le bord monté du côté de la caisse du véhicule lorsque le pneumatique est monté sur le véhicule selon ledit sens de montage prédéterminé et inversement pour le bord axial extérieur 45. Dans le document, l'expression « côté extérieur du véhicule » désigne le bord axial extérieur 45.

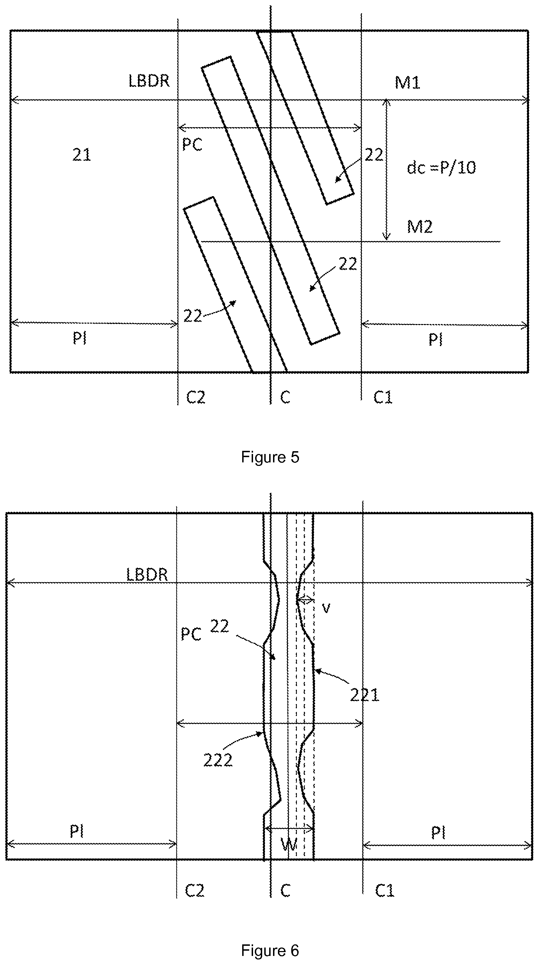

Les figures 5 à 7 représentent divers modes de réalisation d'une bande de roulement selon l'invention. La figure 5 représente une bande de roulement dont la partie centrale Pc comporte plusieurs rainures 22 telles que toute portion de la partie centrale Pc de la bande de roulement comprise entre deux plans méridiens (M1, M2) dont la distance circonférentielle dc est au plus égale à un dixième du périmètre extérieur du pneumatique P, comprend au moins une et au plus trois rainures 22 ouvertes sur les plans méridiens (M1, M2) délimitant la portion considérée, et fermées sur les plans circonférentiels (C1, C2) délimitant la partie centrale de la bande de roulement

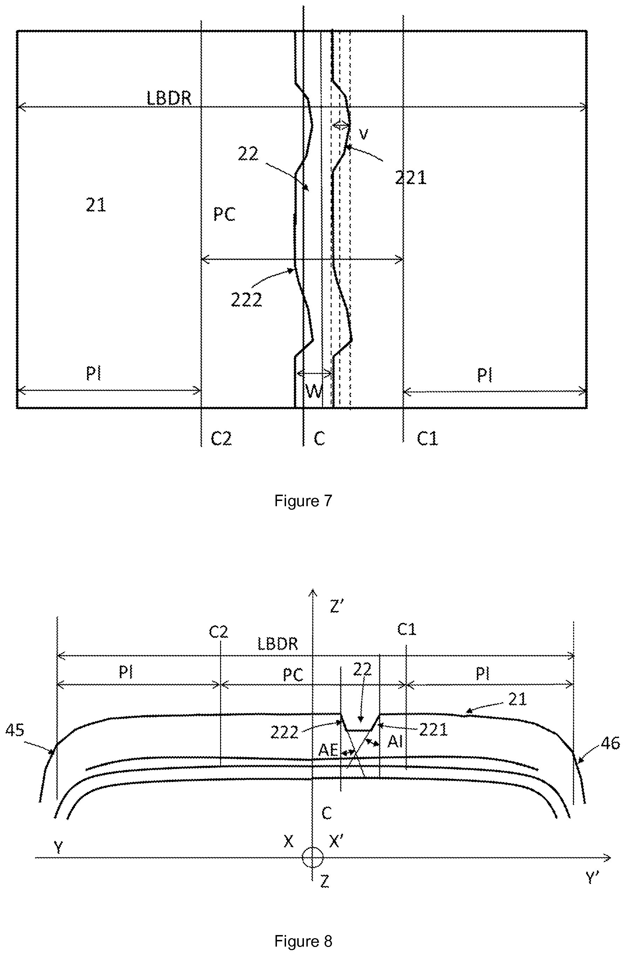

Les figures 6 et 7 représentent deux modes de réalisation d'une bande de roulement selon l'invention avec une seule rainure essentiellement circonférentielle, ou sillon circonférentiel, dans la partie centrale Pc. La figure 6 présente des variations (v) des positions axiales des faces latérales 221 et 222 de la rainure 22, créant des variations de la largeur W de la rainure propres à créer des effets venturi pour accentuer l'effet d'aspiration de l'invention, selon un premier mode de réalisation de l'invention. Cela augmente également la rigidité en cisaillement de la bande de roulement autour de la rainure.

La figure 7 présente des variations (v) des positions axiales des faces latérales 221 et 222 de la rainure 22, sans variation de la largeur W de la rainure, selon un deuxième mode de réalisation de l'invention. Cela permet d'augmenter la rigidité en cisaillement de la bande de roulement autour de la rainure sans créer d'effet venturi, car la largeur W de la rainure reste constante dans la circonférence. Rigidifier ainsi la sculpture permet d'améliorer la performance en comportement et en usure du pneumatique.

La figure 8 représente, selon un troisième mode de réalisation de l'invention, les angles Al et AE dits de dépouilles respectivement de la face latérale intérieure 221 et de la face latérale extérieure 222 en fonction de leurs positions respectives vis-à-vis des bords axiaux du pneumatique intérieur 46 et extérieur 45. La face latérale intérieure 221 est axialement plus proche du bord axial intérieur 46 du pneumatique. L'angle de dépouille d'une face latérale d'une rainure est mesuré dans le plan méridien entre l'axe radial et la tangente à la face latérale de la rainure au point de coordonnée radiale médiane, entre la surface de roulement et le point le plus radialement intérieur de la face de fond de la rainure dans le plan méridien considéré. La figure est conforme à l'invention ; en effet l'angle Al de dépouille de la face latérale intérieur 221 est au moins égal à l'angle de dépouille AE de la face latérale extérieur 222. Selon ce mode de réalisation de l'invention, l'angle de dépouille AE est au plus égal à l'angle de dépouille Al.

Les inventeurs ont réalisé des calculs et des tests sur la base de l'invention pour un pneumatique pour véhicule de tourisme de dimension 245/40 R18, gonflé à une pression de 1.7 bars à froid, et dont la largeur axiale est de 245 mm. Ils ont comparé le pneumatique A selon l'état de l'art, dépourvu de toute rainure dans sa bande de roulement et le pneumatique B selon l'invention dans la bande de roulement duquel ont été disposées, dans sa partie centrale Pc, deux rainures circonférentielles de 10 mm de largeur et de profondeur 4 mm, pour un taux d'entaillement de 11%. La bande de roulement a une épaisseur de 5.7 mm. Aucune autre rainure ou découpure n'est disposée dans les parties latérales Pl de la bande de roulement, dont le taux d'entaillement est nul.

La bande de roulement comprend un matériau caoutchouteux dont le facteur de perte, mesuré à 60°C et 10 Hz, est égal à 54%. Les angles des dépouilles des faces latérales des rainures sont nuls.

Les rainures ont été obtenues par taillage d'un pneumatique témoin A.

Les calculs ont montré une évolution de la pression dans l'aire de contact susceptible d'être perçue en test à haute vitesse. Un positionnement des rainures dans la partie centrale de la bande de roulement permet, d'après les calculs, de multiplier par 2 l'effet de différentiel de pression par rapport à un positionnement des rainures dans les parties latérales.

Les pneumatiques ont été testés en freinage sur un même véhicule de course automobile. Ledit véhicule de course a été testé avec un train de pneumatiques A, dit témoin, et ensuite avec un train de pneumatiques B selon l'invention. Le résultat donné est la moyenne de trois tests.

Pour un freinage à faible vitesse entre 100 km/h et 5 km/h, la diminution de surface de contact due à la présence des rainures est visible et la distance de freinage pour le train de pneumatiques B selon l'invention augmente de plus de 2.5% par rapport au train de pneumatiques témoins A, ce qui correspond à une dégradation de la performance d'adhérence mais ; dans une plage de vitesses peu intéressante sur un circuit pour automobile.

En revanche sur un test de freinage à haute vitesse entre 250 km/h et 150 km/h, la distance de freinage pour le train de pneumatiques B selon l'invention, diminue de plus de 0.8% par rapport au train de pneumatiques témoins A, ce qui correspond à une augmentation de la performance d'adhérence mais dans une plage de vitesses intéressante sur un circuit pour automobile.

## Revendications

1. Pneumatique (1) dont l'indice de vitesse est au moins V, c'est-à-dire destiné à être monté sur un véhicule dont la vitesse maximale autorisée est au moins égale à 240 km/h, dont la largeur axiale est au moins égale à 200 mm et ayant un périmètre extérieur P, comprenant :
• une bande de roulement (2) destinée à entrer en contact avec un sol par l'intermédiaire d'une surface de roulement (21), ayant une largeur axiale LBDR et un taux d'entaillement volumique au moins égal à 2% et au plus égal à 20%,
• la bande de roulement (2) comportant une partie centrale Pc, centrée sur un plan équatorial C et délimitée par deux plans circonférentiels (C1, C2), et deux parties latérales Pl positionnées axialement de part et d'autre de la partie centrale Pc,
• la partie centrale Pc de la bande de roulement (2) comprenant au moins une rainure (22), formant un espace débouchant sur la surface de roulement (21) et étant délimitée par au moins deux faces latérales principales (221, 222) reliées par une face de fond (223),
• la au moins une rainure (22) de la partie centrale Pc de la bande de roulement (2) ayant une largeur moyenne W au moins égale à 6 mm et au plus égale à 30 mm, et une profondeur H au moins égale à 3 mm et au plus égale à 6 mm,
**caractérisé en ce que** la partie centrale Pc de la bande de roulement (2) a une largeur axiale au plus égale au tiers de la largeur axiale LBDR de la bande de roulement (2), **en ce que** toute portion de la partie centrale Pc de la bande de roulement (2), circonférentiellement délimitée par deux plans méridiens (M1, M2) séparés par une distance circonférentielle dc égale à un dixième du périmètre extérieur P du pneumatique, comprend au moins une et au plus trois rainures (22) ouvertes sur les plans méridiens (M1, M2) délimitant la portion considérée, **et en ce que** les taux d'entaillement respectifs des parties latérales Pl de la bande de roulement (2) sont nuls.

2. Pneumatique selon la revendication 1 **dans lequel** la bande de roulement (2) comprend un matériau caoutchouteux dont le facteur de perte P60, mesuré à 60°C et 10 Hz, est au moins égal à 25%.

3. Pneumatique selon l'une quelconque des revendications 1 ou 2 **dans lequel** la bande de roulement (2) comprend un matériau caoutchouteux dont le facteur de perte P60, mesuré à 60°C et 10 Hz, est au moins égal à 35%.

4. Pneumatique selon l'une quelconque des revendications 1 à 3 **dans lequel** la bande de roulement a une épaisseur radiale maximale E au moins égale à 3 mm et au plus égale à 7 mm.

5. Pneumatique selon la revendication 4 **dans lequel** la bande de roulement a une épaisseur radiale maximale E au plus égale à 5.5 mm.

6. Pneumatique selon l'une quelconque des revendications 1 à 5 **dans lequel** la partie centrale Pc de la bande de roulement (2) a une largeur axiale égale au quart de la largeur axiale LBDR de la bande de roulement (2).

7. Pneumatique selon l'une quelconque des revendications 1 à 6, comprenant une bande de roulement (2) ayant deux bords axiaux dont l'un, destiné à être positionné du côté intérieur du véhicule, est appelé bord axial intérieur (46) **dans lequel** au moins une rainure (22) de la bande de roulement (2) a une face latérale principale intérieure (221), axialement la plus proche du bord axial intérieur (46), formant, avec un plan circonférentiel (XZ), un angle moyen de dépouille (Al) au moins égal à 10°.

8. Pneumatique selon la revendication 7 **dans lequel** l'angle moyen de dépouille (Al) de la face latérale principale intérieure (221) est au moins égal à 30°.

9. Pneumatique selon l'une quelconque des revendications 7 ou 8 **dans lequel** la au moins une rainure (22) de la bande de roulement (2) a une face latérale principale extérieure (222), axialement la plus éloignée du bord axial intérieur (46), formant, avec un plan circonférentiel (XZ), un angle moyen de dépouille (AE) au plus égal à l'angle moyen de dépouille (Al) de la face latérale principale intérieure.

10. Pneumatique selon l'une quelconque des revendications 1 à 9 **dans lequel** au moins une rainure (22) de la partie centrale Pc de la bande roulement (2) est obtenue par moulage.

11. Pneumatique selon l'une quelconque des revendications 1 à 9 **dans lequel** au moins une rainure (22) de la partie centrale Pc de la bande roulement (2) est obtenue par une opération mécanique de taillage ou d'usinage.

12. Pneumatique selon l'une quelconque des revendications 1 à 11 **dans lequel** la partie centrale Pc de la bande roulement (2) contient une unique rainure sensiblement circonférentielle s'étendant sur toute la circonférence de la bande de roulement.

13. Pneumatique selon la revendication 12 **dans lequel** la largeur moyenne W de l'unique rainure (22) sensiblement circonférentielle a des variations (v) au moins égales à 1 mm sur toute la circonférence du pneumatique.

## Patentansprüche

1. Reifen (1), dessen Geschwindigkeitsindex mindestens V ist, d. h. der dazu bestimmt ist, an einem Fahrzeug montiert zu sein, dessen zulässige Höchstgeschwindigkeit mindestens 240 km/h beträgt, dessen axiale Breite mindestens 200 mm beträgt und der einen Außenumfang P aufweist, umfassend:
• einen Laufstreifen (2), der dazu bestimmt ist, über eine Lauffläche (21) mit einem Boden in Kontakt zu treten, mit einer axialen Breite LBDR und einem Negativprofilanteil von mindestens 2 % und höchstens 20 %,
• wobei der Laufstreifen (2) einen mittleren Teil Pc, der auf einer Äquatorialebene C zentriert und durch zwei Umfangsebenen (C1, C2) begrenzt ist, und zwei seitliche Teile Pl, die axial auf beiden Seiten des mittleren Teils Pc angeordnet sind, aufweist,
• wobei der mittlere Teil Pc des Laufstreifens (2) mindestens eine Rille (22) umfasst, die einen zur Lauffläche (21) hin offenen Raum bildet und durch mindestens zwei seitliche Hauptflächen (221, 222) begrenzt ist, die durch eine Bodenfläche (223) verbunden sind,
• wobei die mindestens eine Rille (22) des mittleren Teils Pc des Laufstreifens (2) eine mittlere Breite W von mindestens 6 mm und höchstens 30 mm und eine Tiefe H von mindestens 3 mm und höchstens 6 mm aufweist,
**dadurch gekennzeichnet, dass** der mittlere Teil Pc des Laufstreifens (2) eine axiale Breite von höchstens einem Drittel der axialen Breite LBDR des Laufstreifens (2) aufweist, dass jeder Abschnitt des mittleren Teils Pc des Laufstreifens (2), der in Umfangsrichtung durch zwei Meridianebenen (M1, M2) begrenzt ist, die durch einen Umfangsabstand von einem Zehntel des Außenumfangs P des Reifens getrennt sind, mindestens eine und höchstens drei Rillen (22) aufweist, die zu den den betreffenden Abschnitt begrenzenden Meridianebenen (M1, M2) offen sind, und dass die jeweiligen Negativprofilanteile der seitlichen Teile Pl des Laufstreifens (2) Null sind.

2. Reifen nach Anspruch 1, wobei der Laufstreifen (2) ein gummiartiges Material umfasst, dessen Verlustfaktor P60, gemessen bei 60°C und 10 Hz, mindestens 25 % beträgt.

3. Reifen nach einem der Ansprüche 1 oder 2, wobei der Laufstreifen (2) ein gummiartiges Material umfasst, dessen Verlustfaktor P60, gemessen bei 60°C und 10 Hz, mindestens 35 % beträgt.

4. Reifen nach einem der Ansprüche 1 bis 3, wobei der Laufstreifen eine maximale radiale Dicke E von mindestens 3 mm und höchstens 7 mm aufweist.

5. Reifen nach Anspruch 4, wobei der Laufstreifen eine maximale radiale Dicke E von höchstens 5,5 mm aufweist.

6. Reifen nach einem der Ansprüche 1 bis 5, wobei der mittlere Teil Pc des Laufstreifens (2) eine axiale Breite von einem Viertel der axialen Breiten LBDR des Laufstreifens (2) aufweist.

7. Reifen nach einem der Ansprüche 1 bis 6, umfassend einen Laufstreifen (2) mit zwei axialen Rändern, von denen einer, der dazu bestimmt ist, auf der Innenseite des Fahrzeugs positioniert zu sein, als innerer axialer Rand (46) bezeichnet wird, wobei mindestens eine Rille (22) des Laufstreifens (2) eine innere seitliche Hauptfläche (221) aufweist, die dem inneren axialen Rand (46) am nächsten liegt und mit einer Umfangsebene (XZ), einen mittleren Freiwinkel (Al) von mindestens 10° bildet.

8. Reifen nach Anspruch 7, wobei der mittlere Freiwinkel (Al) der inneren seitlichen Hauptfläche (221) mindestens 30° beträgt.

9. Reifen nach einem der Ansprüche 7 oder 8, wobei die mindestens eine Rille (22) des Laufstreifens (2) eine äußere seitliche Hauptfläche (222) aufweist, die vom inneren axialen Rand (46) axial am weitesten entfernt ist und mit einer Umfangsebene (XZ) einen mittleren Freiwinkel (AE) ausbildet, der höchstens gleich dem mittleren Freiwinkel (Al) der inneren seitlichen Hauptfläche ist.

10. Reifen nach einem der Ansprüche 1 bis 9, wobei mindestens eine Rille (22) des mittleren Teils Pc des Laufstreifens (2) durch Formen erhalten wird.

11. Reifen nach einem der Ansprüche 1 bis 9, wobei mindestens eine Rille (22) des mittleren Teils Pc des Laufstreifens (2) durch einen mechanischen Schneid- oder Bearbeitungsvorgang erhalten wird.

12. Reifen nach einem der Ansprüche 1 bis 11, wobei der mittlere Teil Pc des Laufstreifens (2) eine einzige, im Wesentlichen umlaufende Rille enthält, die sich über den gesamten Umfang des Laufstreifens erstreckt.

13. Reifen nach Anspruch 12, wobei die mittlere Breite W der einzigen, im Wesentlichen umlaufenden Rille (22) Variationen (v) von mindestens 1 mm über den gesamten Umfang des Reifens aufweist.

## Claims

1. Tyre (1), the speed rating of which is at least V, that is to say one that is intended to be mounted on a vehicle of which the maximum permissible speed is at least equal to 240 km/h, the axial width of which is at least equal to 200 mm, and having an outer perimeter P, comprising:
• a tread (2), intended to come into contact with the ground via a tread surface (21), having an axial width LBDR and a volumetric void ratio at least equal to 2% and at most equal to 20%,
• the tread (2) having a central part Pc, centred on an equatorial plane C and delimited by two circumferential planes (C1, C2), and two lateral parts PI position axially on either side of the central part Pc,
•
• the central part Pc of the tread (2) comprising at least one groove (22), forming a space opening onto the tread surface (21) and being delimited by at least two main lateral faces (221, 222) connected by a bottom face (223),
• the at least one groove (22) in the central part Pc of the tread (2) having a mean width W at least equal to 6 mm and at most equal to 30 mm, and a depth H at least equal to 3 mm and at most equal to 6 mm,
**characterized in that** the central part Pc of the tread (2) has an axial width at most equal to one third of the axial width LBDR of the tread (2), **and in that** any portion of the central part Pc of the tread (2) that is circumferentially delimited by two meridian planes (M1, M2) separated by a circumferential distance dc equal to one tenth of the outer perimeter P of the tyre comprises at least one and at most three grooves (22) that open onto the meridian planes (M1, M2) delimiting the portion in question, and **wherein** the respective void ratios of the lateral parts PI of the tread (2) are zero.

2. Tyre according to Claim 1, **wherein** the tread (2) comprises a rubber material, the loss factor P60 of which, measured at 60°C and 10 Hz, is at least equal to 25%.

3. Tyre according to either one of Claims 1 and 2, **wherein** the tread (2) comprises a rubber material, the loss factor P60 of which, measured at 60°C and 10 Hz, is at least equal to 35%.

4. Tyre according to any one of Claims 1 to 3, **wherein** the tread has a maximum radial thickness E at least equal to 3 mm and at most equal to 7 mm.

5. Tyre according to Claim 4, **wherein** the tread has a maximum radial thickness E at most equal to 5.5 mm.

6. Tyre according to any one of Claims 1 to 5, **wherein** the central part Pc of the tread (2) has an axial width equal to one quarter of the axial width LBDR of the tread (2).

7. Tyre according to any one of Claims 1 to 6, comprising a tread (2) having two axial edges, one of which, intended to be positioned on the inner side of the vehicle, is referred to as the inner axial edge (46), **wherein** at least one groove (22) in the tread (2) has an inner main lateral face (221), axially closest to the inner axial edge (46), that forms a mean taper angle (Al) with a circumferential plane (XZ) that is at least equal to 10°.

8. Tyre according to Claim 7, **wherein** the mean taper angle (Al) of the inner main lateral face (221) is at least equal to 30°.

9. Tyre according to either one of Claims 7 and 8, **wherein** the at least one groove (22) in the tread (2) has an outer main lateral face (222), axially furthest away from the inner axial edge (46), that forms a mean taper angle (AE) with a circumferential plane (XZ) that is at most equal to the mean taper angle (Al) of the inner main lateral face.

10. Tyre according to any one of Claims 1 to 9, **wherein** at least one groove (22) in the central part Pc of the tread (2) is obtained by moulding.

11. Tyre according to any one of Claims 1 to 9, **wherein** at least one groove (22) in the central part Pc of the tread (2) is obtained by a mechanical cutting or machining operation.

12. Tyre according to any one of Claims 1 to 11, **wherein** the central part Pc of the tread (2) contains a single, substantially circumferential groove extending around the entire circumference of the tread.

13. Tyre according to Claim 12, **wherein** the mean width W of the single, substantially circumferential groove (22) has variations (v) at least equal to 1 mm around the entire circumference of the tyre.
